Europäisches Patentamt

European Patent Office

Office européen des brevets

(11) Veröffentlichungsnummer: **0 335 169**
A1

## EUROPÄISCHE PATENTANMELDUNG

(21) Anmeldenummer: 89104579.1

(22) Anmeldetag: 15.03.89

(51) Int. Cl.⁴: **H02M 7/515**

(30) Priorität: 28.03.88 DE 3810535

(43) Veröffentlichungstag der Anmeldung:
04.10.89 Patentblatt 89/40

(84) Benannte Vertragsstaaten:
AT BE CH DE FR GB IT LI SE

(71) Anmelder: **Siemens Aktiengesellschaft**
**Wittelsbacherplatz 2**
**D-8000 München 2(DE)**

(72) Erfinder: **Tölle, Hans-Jürgen, Dipl.-Ing.**
**Am Europakanal 36**
**D-8520 Erlangen(DE)**

(54) Vorrichtung zur verlust- und blindleistungsarmen Schaltentlastung der Halbleiterschalter eines Wechselrichters.

(57) Der Leistungsteil (LT) eines Wechselrichters ist am oberen bzw. unteren Ende (B,C) über je eine sättigbare Stufendrossel ($L_{S1}$, $L_{S2}$) mit dem positiven bzw. negativen Potential einer Gleichspannungsquelle ($u_D$) verbunden. Zur Schaltentlastung der Halbleiterschalter (T1,T2) einer jeden Phase dient ein Beschaltungsnetzwerk (BN). Dabei bewirkt ein aus einem Abschaltentlastungskondensator ($C_A$), zwei Speicherkondensatoren ($C_{SP1}$,$C_{SP2}$) und zwei Abschaltentlastungsdioden (D10,D20) bestehender Teil eine gleichmäßige Abschaltentlastung, und ein aus zwei Stromanstiegsbegrenzungsdrosseln (L1,L2) und vier Rückspeisedioden (D12,D11, D22,D21) bestehender Teil eine gleichmäßige Einschaltentlastung der oberen bzw. unteren Halbleiterschalter (T1,T2). Mit Hilfe der Stufendrosseln ($L_{S1}$,$L_{S2}$) wird der Leistungsteil (LT) und das Beschaltungsnetzwerk (BN) insbesondere während des Einschaltvorganges einer der Halbleiterschalter vorübergehend so von der Gleichspannungsquelle abgekoppelt, daß die zwischengespeicherten Beschaltungsenergien nahezu verlust- und blindleistungsfrei in die Last eingespeist werden.

FIG 2

EP 0 335 169 A1

# Vorrichtung zur verlust- und blindleistungsarmen Schaltentlastung der Halbleiterschalter eines Wechselrichters

Die Erfindung betrifft eine Vorrichtung zur verlustarmen Entlastung beim Ein- und Ausschaltvorgang der Halbleiterschalter in einem von einer Gleichspannungsquelle gespeisten ein- oder mehrphasigen Wechselrichter.

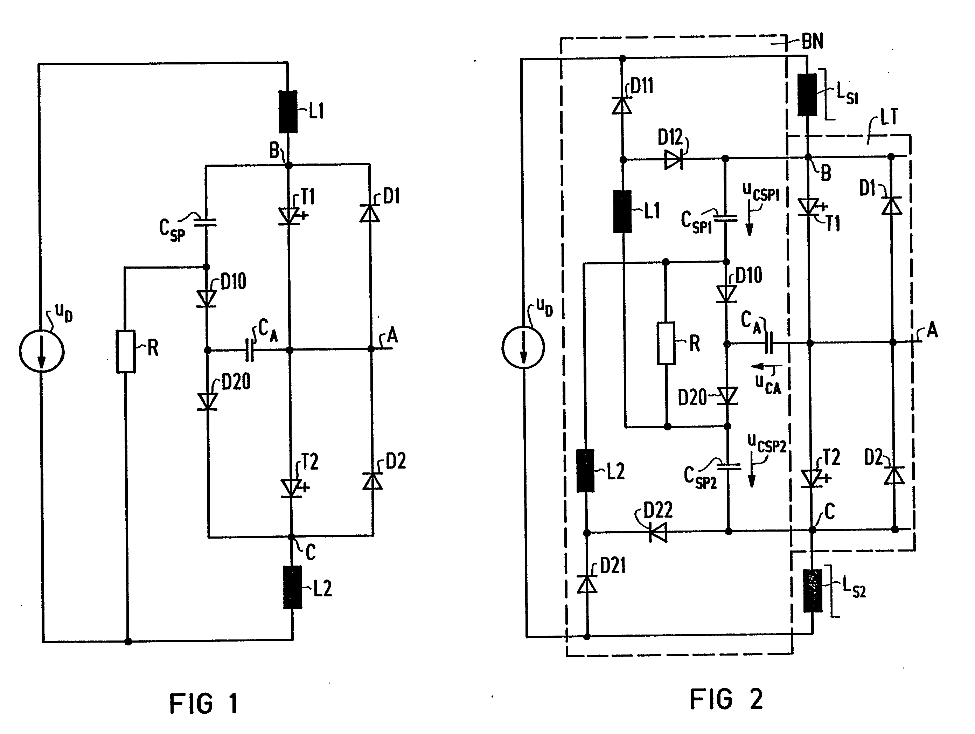

Eine derartige Schaltung ist z.B. aus der DE-OS 32 44 623 bekannt und in der "Elektrotechnischen Zeitschrift (etz), Bd.104, 1983, Heft 7´8, Seite 328 bis 332" insbesondere auf der Seite 131 beschrieben. Dieses bekannte Beschaltungsnetzwerk ist in der FIG 1 dargestellt und besteht aus zwei Einschaltentlastungsdrosseln L1, L2, einem Abschaltentlastungskondensator $C_A$, einem Speicherkondensator $C_{SP}$, zwei Abschaltentlastungsdioden D10, D20 und einem Entladewiderstand R. Dabei ist die dargestellte Wechselrichterphase, welche aus mit antiparallelen Freilaufdioden D1, D2 beschalteten Halbleiterschaltern T1, T2 besteht, am oberen bzw. unteren Ende B bzw. C über eine als Stromanstiegsbegrenzung wirkende erste bzw. zweite Einschaltentlastungsdrossel L1 bzw. L2 an das positive bzw. negative Potential der speisenden Gleichspannungsquelle $u_D$ angeschlossen. Der Abschaltentlastungskondensator $C_A$ steht an seinem einen Ende mit dem Lastausgang A der Wechselrichterphase in Verbindung. Desweiteren ist die Reihenschaltung aus dem Speicherkondensator $C_{SP}$ und der ersten Abschaltentlastungsdiode D10 zwischen dem oberen Ende B der Wechselrichterphase und dem anderen Ende des Abschaltentlastungskondensators $C_A$ angeordnet. Die zweite Abschaltentlastungsdiode D20 verbindet schließlich das andere Ende des Abschaltentlastungskondensators $C_A$ mit dem unteren Ende C der Wechselrichterphase. Zum Abbau der während eines Abschaltvorganges im Abschaltentlastungsund Speicherkondensator zwischengespeicherten Beschaltungsenergien dient ein Entladewiderstand R, welcher den Verbindungspunkt zwischen dem Speicherkondensator und der ersten Abschaltentlastungsdiode mit dem negativen Potential der Gleichspannungsquelle $u_D$ verbindet. In einer anderen, nicht dargestellten Ausführungsform kann anstelle des Entladewiderstandes R eine z.B. als sogenannte "Chopperschaltung" ausgeführte Rückspeisevorrichtung verwendet werden, mit deren Hilfe die Beschaltungsenergien in die speisende Gleichspannungsquelle $u_D$ zurückgespeist werden.

Dieses Beschaltungsnetzwerk hat zum einen den Nachteil, daß es mit einer schaltungsbedingten Unsymmetrie behaftet ist. So wirkt bei der Abschaltung des oberen Halbleiterschalters T1 die Reihenschaltung aus dem Speicherkondensator $C_{SP}$ und dem Abschaltentlastungskondensator $C_A$ entlastend. Bei der Abschaltung des unteren Halbleiterschalters T2 dagegen wirkt nur der Abschaltentlastungskondensator $C_A$ entlastend. Eine derartige Unsymmetrie hat zur Folge, daß die in der Regel identischen Halbleiterschalter T1, T2 nicht in der gleichen Weise entlastet werden. Insbesondere bei der Auslegung einer derartigen Schaltung muß somit berücksichtigt werden, daß bei der Abschaltung der Halbleiterschalter T1 bzw. T2 unterschiedliche Anstiegsgeschwindigkeiten in der wiederkehrenden positiven Sperrspannung am jeweiligen Schalter auftreten. Die Schaltung hat den weiteren Nachteil, daß aufgrund des Entladewiderstandes pulsartige Ströme in den Zuleitungenzur speisenden Quelle auftreten. Zudem werden bei Verwendung einer Energierückspeisevorrichtung anstelle des Entladewiderstandes R die zwischengespeicherten Energien in die Quelle $u_D$ rückgeführt. Dies entspricht aber einer vom Wechselrichter benötigten "Kommutierungsblindleistung", welche von der speisenden Gleichspannungsquelle zum Zwecke der Aus- und Einschaltentlastung der Wechselrichterhalbleiterschalter periodisch zur Verfügung gestellt werden muß. Desweiteren ist es in der Praxis nicht in jedem Fall möglich und zulässig, die Eingangsgleichspannungsquelle mit derart pulsierenden Rückladeenergien zu beaufschlagen.

Der Erfindung liegt die Aufgabe zugrunde, ein Beschaltungsnetzwerk anzugeben, welches möglichst ohne Belastung der speisenden Gleichspannungsquelle eine verlustarme und symmetrische Aus-und Einschaltentlastung der Halbleiterschalter eines Wechselrichters ermöglicht.

Die Aufgabe wird gelöst mit Hilfe der im Anspruch 1 angegebenen Merkmale. Vorteilhafte weitere Ausgestaltungen der Erfindung sind in den Unteransprüchen angegeben.

Die Erfindung wird desweiteren anhand der nachfolgend kurz angeführten Figuren 2 bis 5 naher erläutert. Dabei zeigt:

FIG 1 das bereits beschriebene,bekannte Beschaltungsnetzwerk für einen Wechselrichter,

FIG 2 das Beschaltungsnetzwerk gemäß der vorliegenden Erfindung,

FIG 3a-3d die Funktionsweise des erfindungsgemäßen Beschaltungsnetzwerkes am Beispiel der bei der Abschaltung eines Wechselrichterventiles auftretenden Strompfade,

FIG 4a-4d die Funktionsweise des erfindungsgemäßen Beschaltungsnetzwerkes am Beispiel der beim Einschalten eines Wechselrichterventiles auftretenden Strompfade, und

FIG 5 die zeitlichen Verläufe der wichtigsten Ströme und Spannungen bei der Aus- bzw. Einschaltung eines der Wechselrichterventile gemäß den Darstellungen in den Figuren 3a bis 3d bzw. Figuren 4a bis 4d.

FIG 2 zeigt die erfindungsgemäße Vorrichtung zur verlustarmen Entlastung beim Aus- und Einschaltvorgang der Halbleiterschalter eines Wechselrichters. Dabei ist beispielhaft als Leistungsteil LT eine Phase eines Wechselrichters dargestellt, deren oberer bzw. unterer Teil aus dem Halbleiterschalter T1 mit der antiparallelen Freilaufdiode D1 bzw. dem Halbleiterschalter T2 und der Freilaufdiode D2 besteht. Der Ausgang dieser Phase ist mit A, der obere bzw. untere Anschluß mit B und C bezeichnet. Gemäß der vorliegenden Erfindung ist ein derartiger, in der Regel aus mehreren Phasen bestehender Leistungsteil an seinem oberen bzw. unteren Ende B, C über je eine als eine sättigbare Induktivität dienende sogenannte "Stufendrossel" $L_{S1}$ bzw. $L_{S2}$ mit dem positiven bzw. negativen Potential der Gleichspannungsquelle $u_D$ verbunden. Darüber hinausgehend ist erfindungsgemäß eine jede Phase des Wechselrichters mit einem Beschaltungsnetzwerk BN zur verlust- und blindleistungsarmen Schaltentlastung der Halbleiterschaltelemente T1, T2 beim Aus- und Einschaltvorgang versehen. Dabei wirken im wesentlichen ein erster und zweiter Speicherkondensator $C_{SP1}$, $C_{SP2}$ und ein Abschaltentlastungskondensator $C_A$ ausschaltentlastend, bzw. eine erste und zweite Einschaltentlastungsdrossel L1, L2 einschaltentlastend.

Der Abschaltentlastungskondensator $C_A$ steht gemäß FIG 2 an einem Anschluß mit dem Ausgang A des Leistungsteiles in Verbindung. Eine erste bzw. zweite Reihenschaltung aus dem ersten Speicherkondensator $C_{SP1}$ und einer ersten Abschaltentlastungsdiode D10 bzw. dem zweiten Speicherkondensator $C_{SP2}$ und einer zweiten Abschaltentlastungsdiode D20 verbinden desweiteren das obere Ende B des Leistungsteiles LT mit dem anderen Anschluß des Abschaltentlastungskondensators $C_A$, bzw. diesen mit dem unteren Ende C des Leistungsteils. Der Verbindungspunkt zwischen dem ersten Speicherkondenstor $C_{SP1}$ und der ersten Abschaltentlastungsdiode D10 in der ersten Reihenschaltung steht desweiteren über die zweite Einschaltentlastungsdrossel L2 und eine dritte bzw. vierte Rückspeisediode D22 bzw. D21 mit dem unteren Ende C des Leistungsteils bzw. dem negativen Potential der Gleichspannungsquelle $u_D$ in Verbindung. Schließlich steht der Verbindungspunkt zwischen dem zweiten Speicherkondensator $C_{SP2}$ und der zweiten Abschaltentlastungsdiode D20 in der zweiten Reihenschaltung über die erste Einschaltentlastungsdrossel L1 und eine erste bzw. zweite Rückspeisediode D12 bzw. D11 mit dem oberen Ende B des Leistungsteils LT bzw. dem positiven Potential der Gleichspannungsquelle $u_D$ in Verbindung. In einer weiteren Ausführungsform der Erfindung ist es besonders vorteilhaft, im Beschaltungsnetzwerk BN einen zusätzlichen Entladewiderstand R vorzusehen, welcher zwischen den Verbindungspunkten der Elemente in der ersten und zweiten Reihenschaltung angeordnet ist. In den Schaltungen der Figuren 2 bis 4 ist dieser Entladewiderstand bereits dargestellt.

Die erfindungsgemäße Vorrichtung hat den besonderen Vorteil, daß keine schaltungsinterne Unsymmetrie vorhanden ist. Vielmehr wirkt bei einer Abschaltung des oberen bzw. unteren Halbleiterschalters T1 bzw. T2 die Reihenanordnung aus dem ersten Speicherkondensator $C_{SP1}$ und dem Abschaltentlastungskondensator $C_A$ bzw. die Reihenanordnung aus dem zweiten Speicherkondensator $C_{SP2}$ und dem Abschaltentlastungskondensator $C_A$ ausschaltentlastend. Da für die Kapazitätswerte der Kondensatoren vorteilhaft die Beziehung

$$C_{SP1} \approx C_{SP2} \gg C_A$$

gilt, haben die wiederkehrenden positiven Sperrspannungen am oberen bzw. unteren Halbleiterschalter T1, T2 annähernd gleiche Anstiegsgeschwindigkeiten.

Die erfindungsgemäßen Stufendrosseln $L_{S1}$, $L_{S2}$ zwischen dem oberen bzw. unteren Ende B, C des Leistungsteils LT und dem positiven bzw. negativen Potential der Gleichspannungsquelle wirken annähernd wie "zeitabhängige Schalter". Wird eine derartige Induktivität im entmagnetisierten Zustand mit einer Spannung beaufschlagt, so muß deren interner "Stufenkern" zunächst bis zum Eintritt des Sättigungszustandes aufmagnetisiert werden. In der hierdurch hervorgerufenen sogenannten "Stufenzeit" hat die Stufendrossel eine nahezu unendlich große Induktivität und läßt nur einen sehr geringen Stromfluß zu. Nach Ablauf dieser Stufenzeit, d.h. nach Erreichen des Sättigungszustandes des Stufenkernes, verliert dagegen die Drossel nahezu vollständig die Induktivität. Die Stufendrossel ist nunmehr quasi "eingeschaltet" und ein Stromfluß in der durch die übrigen Schaltungsteile bedingten vollen Höhe möglich. In der erfindungsgemäßen Vorrichtung zur Entlastung der Halbleiterschalter T1, T2 wird diese Eigenschaft der Stufendrosseln $L_{S1}$ und $L_{S2}$ insbesondere während einer Einschaltung einer der Halbleiterschalter dazu benutzt, das Beschaltungsnetzwerk BN vorübergehend von der Gleichspannungsquelle $u_D$ zu entkoppeln. Hierdurch ist es besonders vorteilhaft möglich, die aufgrund einer vorangegangenen Abschaltung eines der Ventile in den Speicherkondensatoren $C_{SP1}$, $C_{SP2}$ enthaltene Überladung und die aufgrund der Einschaltung in den Einschaltentlastungsdrosseln L1, L2 enthaltene Magnetisierung in die am Ausgang A des Leistungsteils LT der Wechselrichterphase befindliche Last einzuspeisen. Die Gleichspannungsquelle $u_D$ wird somit nicht mehr mit pulsförmigen Umladeströmen belastet. Da folglich die Gleichspannungsquelle insbesondere die im Beschaltungsnetzwerk zwischengespeicherten Beschaltungsenergien selbst nicht wieder aufzunehmen hat, muß sie auch keine "Kommutierungsblindleistung" zur Aufrechterhaltung der Funktionsfähigkeit der erfindungsgemäßen Schaltentlastungsvorrichtung bereitstellen. Vielmehr wird der Anteil der Energie der Gleichspannungsquelle, welcher während eines Schaltzyklusses aus einer Halbleiteraus- und einschaltung zum Zwecke der Schaltentlastung im Beschaltungsnetzwerk BN zwischengespeichert werden muß, am Zyklusende nahezu verlustfrei direkt an die zu speisende Last weitergegeben.

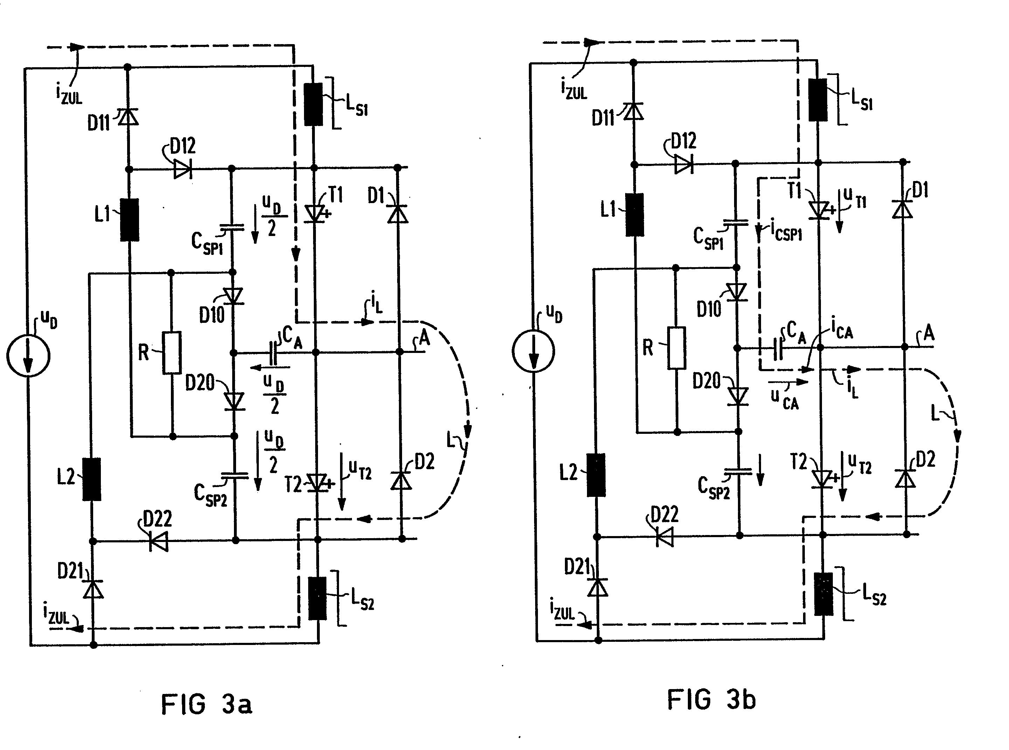

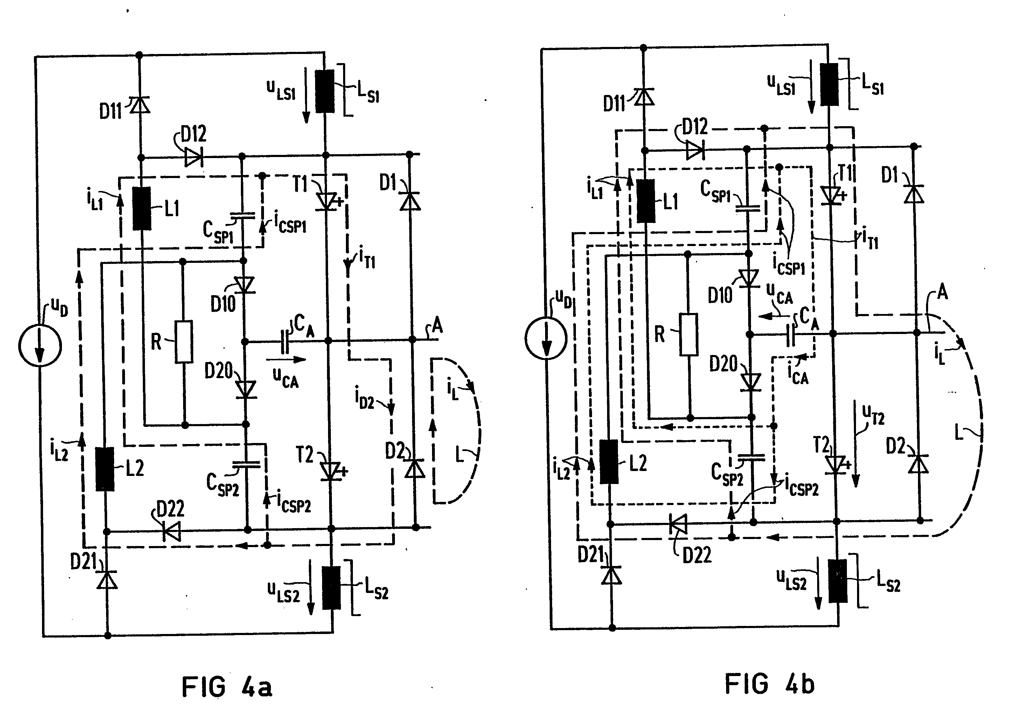

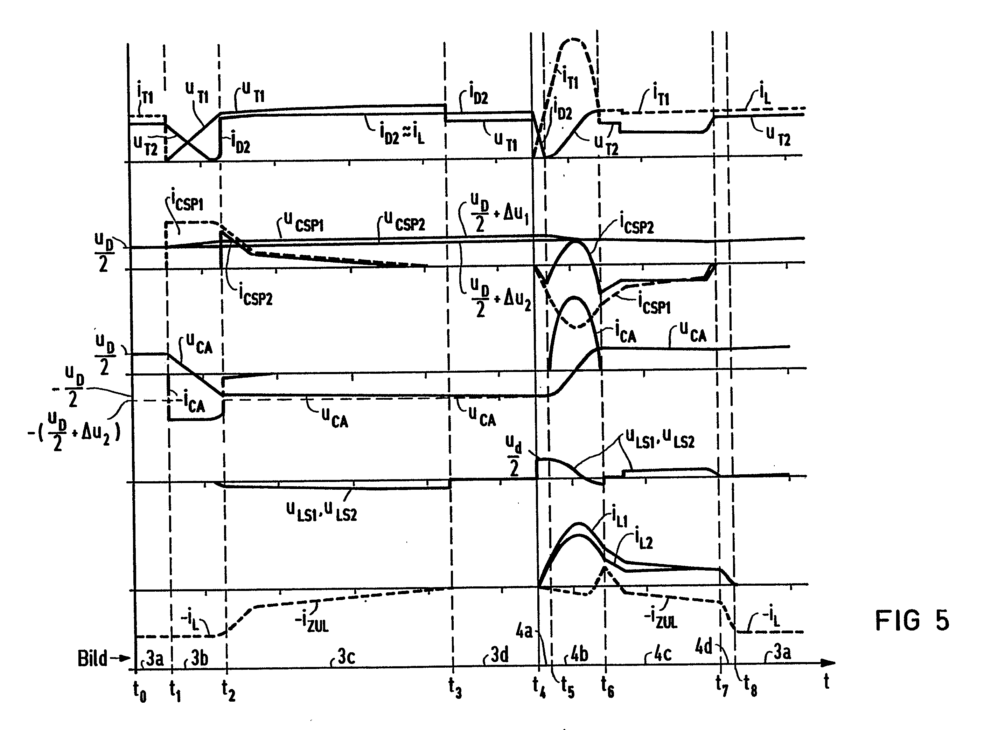

Die Funktionsweise der erfindungsgemäßen Schaltentlastungsvorrichtung wird desweiteren im Detail anhand der Figuren 3a bis 3d und der Figuren 4a bis 4d erläutert. Dabei zeigen die Figuren 3a bis 3d beispielhaft die sich bei einer Abschaltung des Halbleiterschalters T1 einstellenden "Strompfade", und die Figuren 4a bis 4d die sich bei einer erneuten Einschaltung desselben Halbleiterschalters T1 ergebenden "Strompfade". Desweiteren werden insbesondere diese "Strompfade" unter Bezugnahme auf die in der FIG 5 dargestellten Strom- und Spannungsverläufe näher erläutert. Dabei ist der Zeitachse in FIG 5. zu entnehmen, welcher Ausschnitt der dortigen Strom- und Spannungsverläufe jeweils den in den Figuren 3a bis 3d und 4a bis 4d dargestellten Schaltungszuständen zugeordnet werden kann.

So ist in der FIG 3a der eingeschwungene Zustand der Schaltung von FIG 2 dargestellt, bei der bei eingeschaltetem oberen Halbleiterschalter T1 der Laststrom $i_L$ in voller Höhe über die erste Stufendrossel $L_{S1}$ und den Phasenausgang A in die Last L, und von dort über die zweite Stufendrossel $L_{S2}$ in die Schaltung zurückfließt. Der Zuleitungsstrom $i_{ZUL}$ in den mit der Gleichspannungsquelle $u_D$ verbindenden Leitungen ist gleich dem Laststrom $i_L$. Das Beschaltungsnetzwerk selbst ist in diesem Ausgangszustand stromlos, und die Speicherkondensatoren $C_{SP1}$, $C_{SP2}$ und der Abschaltentlastungskondensator $C_A$ sind mit den in der FIG 3a eingetragenen Richtungen auf den halben Wert der Gleichspannung $u_D/2$ aufgeladen. In der FIG 5 sind die dazugehörigen Strom- und Spannungsverläufe zwischen den Zeitpunkten $t_0$ und $t_1$ dargestellt.

Es wird nun angenommen, daß im Zeitpunkt $t_1$ der obere Halbleiterschalter T1 abgeschaltet wird. Entsprechend der Darstellung in der FIG 3b kommutiert der Laststrom $i_L$ sofort auf das Beschaltungsnetzwerk. Es bildet sich ein Strompfad über den ersten Speicherkondensator $C_{SP1}$, die erste Abschaltentlastungsdiode D10 und den Abschaltentlastungskondensator $C_A$ zum Phasenausgang A aus. Es gilt die Beziehung $i_{ZUL} = i_{CSP1} = i_{CA} = i_L$. Hierdurch wird der Abschaltentlastungskondensator $C_A$ in die in der FIG 3b dargestellten Richtung der Kondensatorspannung $u_{CA}$ wiederum annähernd auf den halben Wert der Gleichspannung $u_D$ umgeladen. Aufgrund dieser Umladung baut sich die wiederkehrende positive Sperrspannung $u_{T1}$ erst allmählich in Durchlaßrichtung am gerade abgeschalteten Halbleiterschalter T1 auf. Die bei dieser Ausschaltentlastung des Halbleiterschalters T1 auftretenden Strom-und Spannungsverläufe sind in der FIG 5 zwischen den Zeitpunkten $t_1$ und $t_2$ dargestellt.

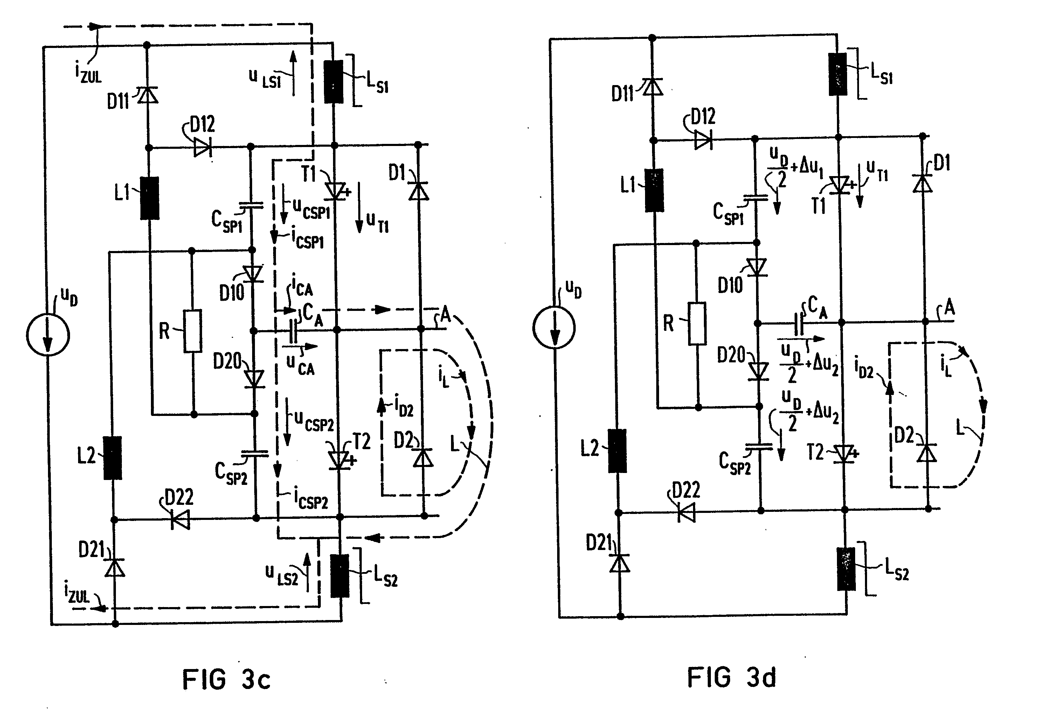

In dem Augenblick, in dem die Spannung $u_{CA}$ am Abschaltentlastungskondensator den Wert der Spannung $u_{CSP2}$ am zweiten Speicherkondensator erreicht hat, wird die zweite Abschaltentlastungsdiode D20 leitend. Dies ist in der FIG 3c und in der FIG 5 zwischen den Zeitpunkten $t_2$ und $t_3$ dargestellt. Der durch die erste Reihenschaltung aus dem ersten Speicherkondensator und der ersten Abschaltentlastungsdiode fließende Strom $i_{CSP1}$ teilt sich nun auf in einen über den Abschaltentlastungskondenstor $C_A$ und die Last L fließenden Anteil $i_{CA}$, und in einen über die zweite Reihenschaltung aus der zweiten Abschaltentlastungsdiode D20 und dem zweiten Speicherkondensator $C_{SP2}$ fließenden Anteil $i_{CSP2}$. Gleichzeitig kommutiert der Laststrom $i_L$ zunehmend auf die Freilaufdiode D2. Das Weiterfließen der Ströme $i_{CSP1}$, $i_{CSP2}$ und $i_{CA}$ führt zu einer geringen Überladung insbesondere der beiden Speicherkondensatoren. Da die Summe der dazugehörigen Spannungen $u_{CSP1}$ und $u_{CSP2}$ nunmehr größer als der Wert der Gleichspannung $u_D$ ist, treten negative Spannungen $u_{LS1}$, $u_{LS2}$ an den Stufendrosseln $L_{S1}$, $L_{S2}$ auf. Hierdurch werden die Stufenkerne der Stufendrosseln zunehmend entmagnetisiert, so daß zum einen der Strom $i_{ZUL}$ in den Zuleitungen abnimmt und zum anderen der Laststrom $i_L$ zunehmend gezwungen wird, als Freilaufstrom $i_{D2}$ über die Freilaufdiode D2 zu fließen.

Nach vollständiger Entmagnetisierung der Stufendrosseln kommt der Zuleitungsstrom $i_{ZUL}$ zum Erliegen. Gleichzeitig fließt der Laststrom $i_L$ in voller Hohe im Freilauf als Diodenstrom $i_{D2}$ über die Freilaufdiode D2. Dieser Zustand ist in der FIG 3d und in FIG 5 im Bereich zwischen $t_3$ und $t_4$ dargestellt. Man erkennt, daß alle Ausgleichsströme im Beschaltungsnetzwerk und in den Stufendrosseln zum Erliegen gekommen sind, und alle Kondensatoren geringfügig überladen sind. Dabei sei angenommen, daß die Spannung $u_{CSP1}$ am ersten Speicherkondensator $C_{SP1}$ um $\Delta u_1$ und die Spannungen $u_{CSP1}$ und $u_{CA}$ am zweiten Speicherkondensator $C_{SP2}$ und am Abschaltentlastungskondenstor $C_A$ um $\Delta u_2$ größer als die halbe Gleichspannung $u_D$ sind.

Desweiteren sei angenommen, daß im Zeitpunkt t4 der obere Halbleiterschalter T1 wieder eingeschaltet wird. Die sich im ersten Moment in der Schaltung von FIG 2 ergebenden Strompfade sind in der FIG 4a und in FIG 5 im Bereich zwischen t4 und t5 darge stellt. Der Strom $i_{T1}$ durch T1 baut sich aufgrund der stromanstiegsbegrenzenden Wirkung der beiden Einschaltentlastungsdrosseln L1 und L2 erst allmählich auf. Er wird gespeist von den Strömen $i_{L2} = i_{CSP1}$ bzw. $i_{L1} = i_{CSP2}$. Diese anklingenden Ströme werden von den beiden parallel geschalteten Reihenschaltungen aus der zweiten Einschaltentlastungsdrossel L2 und dem ersten Speicherkondensator $C_{SP1}$ bzw. dem zweiten Speicherkondensator $C_{SP2}$ und der ersten Einschaltentlastungsdrossel L1 bereitgestellt, welche über den oberen Halbleiterschalter T1, den Phasenausgang A und die noch leitende Freilaufdiode D2 jeweils einen geschlossenen Schwingkreis bilden. Nun beginnt die "Stufenzeit" der Stufendrosseln "abzulaufen", indem der erst allmählich anwachsende, und aus diesem Grund in der FIG 4a noch nicht dargestellte Zuleitungsstrom $i_{ZUL}$ die Stufendrosseln $L_{S1}$, $L_{S2}$ aufmagnetisiert. Da somit der Leistungsteil LT des Wechselrichters und das Beschaltungsnetzwerk BN nahezu vollständig von der Gleichspannungsquelle $u_D$ entkoppelt sind, werden die beiden Schwingkreisströme $i_{L1}$ und $i_{L2}$ gezwungen, in Form des Stromes $i_{T1}$ über den oberen Halbleiterschalter T1 zu fließen. Gleichzeitig nimmt der Strom $i_{D2}$ durch die Freilaufdiode zunehmend ab, und der Laststrom $i_L$ wird zunehmend gezwungen, wieder durch den oberen Halbleiterschalter T1 zu fließen.

Die FIG 4b und der Bereich zwischen den Zeitpunkten t5 und t6 in FIG 5 zeigt den Zustand, nach dem der Strom durch die Freilaufdiode D2 vollständig zum Erliegen gekommen ist. Da der Wechselrichter und das Beschaltungsnetzwerk weiterhin über die Stufendrosseln $L_{S1}$, $L_{S2}$ von der speisenden Gleichspannungsquelle entkoppelt ist, wird der Laststrom $i_L$ ausschließlich von den Schwingkreisströmen $i_{L1}$ und $i_{L2}$ gespeist. Diesen überlagert sich der in der FIG 4b punktiert dargestellte Umladestrom $i_{CA}$. Es ist ein besonderer Vorteil der erfindungsgemäßen Beschaltung, daß dieser Umladestrom über das Halbleiterschaltelement T1 geführt wird und somit die Gleichspannungsquelle in keiner Weise belastet. Der Umladestrom bewirkt eine Rückladung des Abschaltentlastungskondensators $C_A$ in die in der FIG 4b dargestellte Spannungsrichtung $U_{CA}$. Dieses Rückladen wird benötigt, damit der Abschaltentlastungskondensator bei einer erneuten Abschaltung des Halbleiterschalters T1 erneut abschaltentlastend wirken kann. Gleichzeitig wird die ursprünglich vorhandene Überladung des Abschaltentlastungskondensators auf besonders vorteilhafte Weise als Teil des Laststromes $i_L$ in die Last abgeführt. Der Umschwingvorgang ist beendet, wenn die Kondensatorspannung $u_{CA}$ den Wert der Spannung $u_{CSP1}$ am ersten Speicherkondensator $C_{SP1}$ erreicht hat.

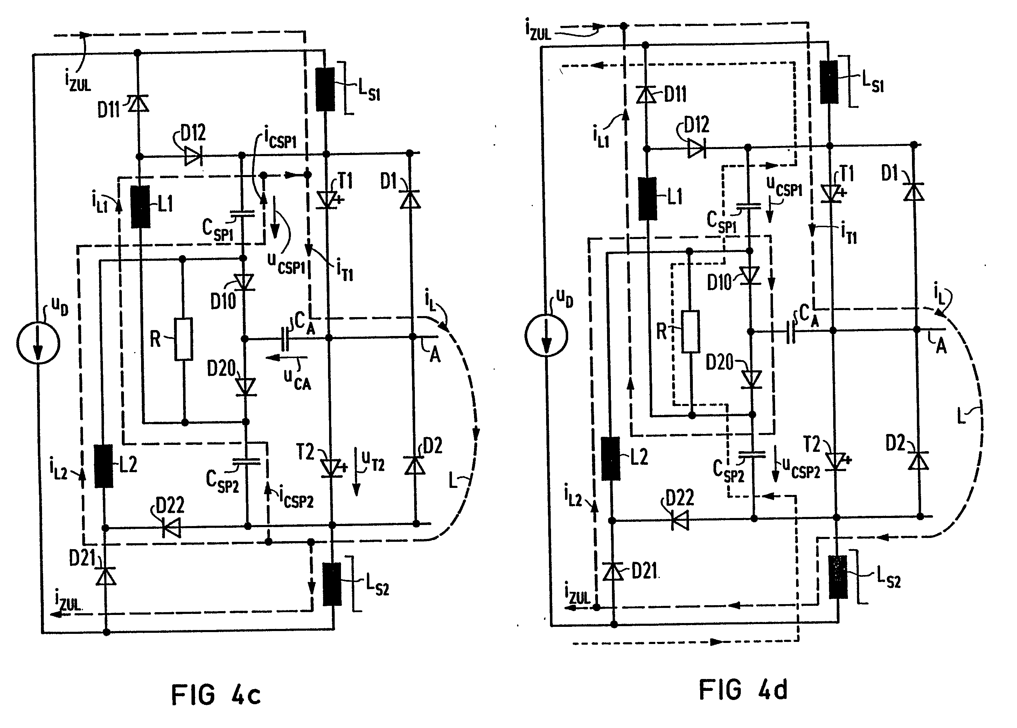

Dieser Zustand ist in der FIG 4c und in FIG 5 im Bereich zwischen den Zeitpunkten t6 und t7 dargestellt. Aufgrund der Speisung des Laststromes $i_L$ durch die beiden Schwingkreisströme $i_{CSP1}$, $i_{CSP2}$ werden die in den Speicherkondensatoren zwischengespeicherten Beschaltungsenergien der Last zur Verfügung gestellt. Desweiteren nimmt der Zuleitungsstrom $i_{ZUL}$ in den Verbindungen zur Gleichspannungsquelle $u_D$ aufgrund der zunehmenden Aufmagnetisierung der Stufendrosseln $L_{S1}$, $L_{S2}$ allmählich zu. Nach Ablauf der "Stufenzeit" verlieren die Stufendrosseln nahezu vollständige ihre Induktivität und sind wieder in der Lage, den Laststrom $i_L$ zu führen.

Dieser Zustand ist in FIG 4d und in FIG 5 im Bereich zwischen den Zeitpunkten t7 und t8 dargestellt. Aufgrund der Laststromübernahme durch die Stufendrosseln $L_{S1}$, $L_{S2}$ kommen die Umschwingströme $i_{CSP1}$ und $i_{CSP2}$ zum Erliegen. Die Spannungen $u_{CSP1}$ und $u_{CSP2}$ am ersten und zweiten Speicherkondensator haben nun wieder annähernd ihren Ausgangswert $u_D/2$ erreicht. Da in den Einschaltentlastungsdrosseln L1 und L2 noch Energie gespeichert ist, bildet sich ein Strom $i_{L1} = i_{L2}$ über die beiden Abschaltentlastungsdioden D10 und D20 zwischen dem negativen und positiven Potential der Gleichspannungsquelle aus. Auch dieser Strom trägt vorübergehend zur Speisung des Laststromes $i_L$ bei, so daß auch die in den Drosseln $L_1$, $L_2$ zwischengespeicherten Beschaltungsenergien nahezu vollständig der Last zur Verfügung gestellt werden. Erst nach Abklingen dieses Entladestromes erreicht der Zu leitungsstrom $i_{ZUL}$ wieder den Wert des Laststromes $i_L$. Alle Ausgleichsvorgänge sind abgeschlossen und es ergibt sich jenseits des Zeitpunktes t8 in der FIG 5 der in der FIG 3a dargestellte Ausgangszustand.

Es ist ein besonderer Vorteil der erfindungsgemäßen Schaltentlastungsvorrichtung, daß diese bei einem als konstant angenommenen Laststrom $i_L$ nahezu verlustfrei arbeitet. In einer weiteren Ausführungsform der Erfindung können die im Beschaltungsnetzwerk BN und den Stufendrosseln $L_{S1}$, $L_{S2}$ zwischengespeicherten Beschaltungsenergien insbesondere dann nahezu vollständig in die Last eingespeist werden, wenn die Stufenzeit der Stufendrosseln größer ist als die zum Umladen des Abschaltentlastungskondensators bei einem Schaltvorgang, insbesondere einem Einschaltvorgang eines der Halbleiterschalter benötigte Zeit, und die Stufendrosseln nahezu ideales "Schaltverhalten" aufweisen.

Häufig wird jedoch in der Praxis der Laststrom $i_L$ insbesondere dann nicht ideal konstant sein, wenn die Last den Phasenausgang A mit einer eigenen Gegenspannung beaufschlagt. Dient als Last z.B. eine elektrische Maschine, so wirkt die von der Winkelgeschwindigkeit abhängige, induzierte Spannung als eine derartige Gegenspannung. In einem solchen Fall ist der Laststrom mit einer Oberschwingung behaftet, deren Frequenz im wesentlichen von der Ein- und Ausschaltgeschwindigkeit der Halbleiterschalter im Wechselrichter bestimmt wird. Die Beschaltungsenergien können aufgrund des wechselnden Momentanwertes des Laststromes somit über die geringfügig unsymmetrischen Schwingkreisströme $i_{L1}$, $i_{L2}$ insbesondere in dem in der FIG 4c dargestellten Zustand der Schaltung nicht vollständig in die Last eingespeist werden. Zum Ausgleich von sich möglicherweise einstellenden, geringfügig unterschiedlichen Ladezuständen, insbesondere der Speicherkondensatoren $C_{SP1}$, $C_{SP2}$, ist es besonders vorteilhaft in einer weiteren Ausführungsform der Erfindung einen zusätzlichen Entladewiderstand R vorzusehen. Dieser ist in den Schaltungen der Figuren 2 bis 4 bereits dargestellt, und zwischen den Verbindungspunkten zwischen dem ersten Speicherkondensator und der ersten Abschaltentlastungsdiode bzw. dem zweiten Speicherkondensator und der zweiten Abschaltentlastungsdiode angeordnet. Es kann sich somit ein in der FIG 4d bereits punktiert dargestellter geringfügiger Ausgleichsstrom vom negativen zum positiven Potential der Gleichspannungsquelle über die zweite Stufendrossel, den zweiten Speicherkondensator, den Entladewiderstand R, den ersten Speicherkondensator und die erste Stufendrossel ausbilden. Auf diese Weise wird auch bei einem oberschwingungshaltigen Laststrom und nicht idealem "Schaltverhalten" der Stufendrosseln der in der FIG 3a dargestellte Ausgangszustand der Schaltung wieder erreicht, bei dem alle Beschaltungskondensatoren auf dem halben Wert der Gleichspannungs $u_D$ aufgeladen sind.

**Ansprüche**

1. Vorrichtung zur verlustarmen Entlastung beim Aus- und Einschaltvorgang der Halbleiterschalter (T1,T2) in einem von einer Gleichspannungsquelle ($U_D$) gespeisten ein- oder mehrphasigen Wechselrichter, wobei

a) eine erste und zweite sättigbare Induktivität ($L_{S1}$,$L_{S2}$) das obere bzw. untere Ende (B,C) des Wechselrichters (LT) mit dem positiven bzw. negativen Potential der Gleichspannungsquelle ($U_D$) verbindet,

und eine jede Wechselrichterphase beschaltet ist mit einem Beschaltungsnetzwerk (BN) aus,

b) einem Abschaltentlastungskondensator ($C_A$), dessen einer Anschluß mit dem Phasenausgang (A) in Verbindung steht,

c) einer ersten Reihenschaltung aus einem ersten Speicherkondensator ($C_{SP1}$) und einer ersten Abschaltentlastungsdiode (D10), welche zwischen dem oberen Ende (B) der Wechselrichterphase und dem anderen Anschluß des Abschaltentlastungskondensators ($C_A$) angeordnet ist,

d) einer zweiten Reihenschaltung aus einem zweiten Speicherkondensator ($C_{SP2}$) und einer zweiten Abschaltentlastungsdiode (D20), welche zwischen dem anderen Anschluß des Abschaltentlastungskondensators ($C_A$) und dem unteren Ende (C) der Wechselrichterphase angeordnet ist,

e) einer ersten Einschaltentlastungsdrossel (L1), welche den Verbindungspunkt zwischen dem zweiten Speicherkondensator und der zweiten Abschaltentlastungsdiode über eine erste bzw. zweite Rückspeisediode (D12,D11) mit dem oberen Ende (B) der Wechselrichterphase bzw. dem positiven Potential der Gleichspannungsquelle ($U_D$) verbindet, und

f) einer zweiten Einschaltentlastungsdrossel (L2), welche den Verbindungspunkt zwischen dem ersten Speicherkondensator und der ersten Abschaltentlastungsdiode über eine dritte bzw. vierte Rückspeisediode (D22,D21) mit dem unteren Ende (C) der Wechselrichterphase bzw. dem negativen Potential der Gleichspannungsquelle ($U_D$) verbindet.

2. Vorrichtung nach Anspruch 1, **gekennzeichnet** durch einen Entladewiderstand (R), welcher den Verbindungspunkt zwischen dem ersten Speicherkondensator ($C_{SP1}$) und der ersten Abschaltentlastungsdiode (D10) mit dem Verbindungspunkt zwischen dem zweiten Speicherkondensator ($C_{SP2}$) und der zweiten Abschaltentlastungsdiode (D20) verbindet (FIG 2).

3. Vorrichtung nach Anspruch 1 oder 2, **dadurch gekennzeichnet,** daß die sättigbaren Induktivitäten ($L_{S1}$,$L_{S2}$) so ausgelegt sind, daß deren Stufenzeit größer ist als die zum Umladen des Abschaltentlastungskondensators ($C_A$) bei einem Schaltvorgang, insbesondere einem Einschaltvorgang, eines der Halbleiterschalter (T1,T2) benötigte Zeit.

FIG 2

FIG 1

FIG 3b

FIG 3a

FIG 3c

FIG 3d

EP 0 335 169 A1

FIG 4a

FIG 4b

FIG 4c

FIG 4d

EP 0 335 169 A1

FIG 5

EP 0 335 169 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| A | DE-A-3524522 (M. JUNG) <br> * Zusammenfassung * <br> --- | 1, 2 | H02M7/515 |
| D,A | DE-A-3244623 (R. MARQUARDT) <br> --- | | |
| D,A | ELEKTROTECHNISCHE ZEITSCRIFT <br> vol. 104, no. 7/8, 1983, <br> Seite 328 - 332; K. HEUMANN et al: <br> "GTO-Thyristoren in sebstgeführten <br> Stromrichtern" <br> ----- | | |

| RECHERCHIERTE SACHGEBIETE (Int. Cl.4 ) |
|---|
| H02M |

Der vorliegende Recherchenbericht wurde für alle Patentansprüche erstellt

| Recherchenort | Abschlußdatum der Recherche | Prüfer |
|---|---|---|
| DEN HAAG | 27 JUNI 1989 | MOUEZA A.J.L. |